**Europäisches Patentamt**

**European Patent Office**

**Office européen des brevets**

(11) Publication number: **0 074 854**
**B1**

(12) **EUROPEAN PATENT SPECIFICATION**

(45) Date of publication of patent specification: **26.11.86**

(21) Application number: **82304858.2**

(22) Date of filing: **15.09.82**

(51) Int. Cl.⁴: **A 23 L 1/22,** A 23 L 1/228, A 23 L 1/229

(54) **Granular chemical seasoning of high specific volume and production thereof.**

(30) Priority: **16.09.81 US 302526**

(43) Date of publication of application:
**23.03.83 Bulletin 83/12**

(45) Publication of the grant of the patent:
**26.11.86 Bulletin 86/48**

(84) Designated Contracting States:
**AT BE CH DE FR GB IT LI LU NL SE**

(56) References cited:
**FR-A-2 056 439**
**FR-A-2 388 507**
**GB-A-1 067 854**
**GB-A-1 079 767**
**US-A-2 785 977**
**US-A-2 934 441**

(73) Proprietor: **Takeda Chemical Industries, Ltd.**
**27, Doshomachi 2-chome Higashi-ku**
**Osaka-shi Osaka, 541 (JP)**

(72) Inventor: **Satani, Eiji**
**12-5, Tamase-cho**
**Ibaraki Osaka 567 (JP)**
Inventor: **Okamoto, Nagaoki**
**A3-406, 9 Shinsenriminamimachi**
**2-chome, Toyonaka Osaka 565 (JP)**
Inventor: **Fritz, James G.**
**1281, Sunnyfield Lane**
**Scotchplains New Jersey 07076 (US)**
Inventor: **Kimura, Hiroshi**
**35-20, Senriyamanishi**
**5-chome, Suita Osaka 565 (JP)**

(74) Representative: **Lewin, John Harvey et al**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a granular chemical seasoning of high specific volume and a production thereof.

Chemical seasonings are available in various forms such as powders, granules, crystals, cubes, pastes and liquids and the degree of meeting the necessary requirements of a chemical seasoning, e.g. measurability, convenience in use, solubility, shelf-life, taste, etc., varies with the forms. Particularly in connection with use in small amount, a chemical seasoning with good measurability and convenience in use, if made available, should prove very convenient not only in home cooking but also in food industries using such a seasoning as one of raw materials. The chemical seasonings available to this day are not satisfactory in the above respects. To overcome the problems, it seems appropriate to increase specific volume of the seasoning. There may be contemplated various procedures for accomplishing the objective. For example, a crushing process for dividing the seasoning into fine powders, a drying process for producing a finely divided chemical seasoning, and a granulation process for increasing the apparent volume of the seasoning may be mentioned. However, the finer the seasoning is divided, the greater is the ease with which the powder is scattered and presents problems with a static electrical charge.

On the other hand, granulation seems to be a suitable procedure for obtaining said desired seasoning but the conventional granulating method is of limited value in the production of many chemical seasonings.

Therefore, the present inventors studied various methods for increasing the apparent volume of chemical seasonings and found that the foam-mat drying system would be suitable for the purpose. The foam-mat drying system was developed by A. I. Morgan Jr. [U.S. Patent 2,934,441] and has been applied to the drying of apple, orange or other fruit juices, pulps, cake mixes, etc. The principle of this drying system is as follows. A material liquid is prepared to a suitable concentration, if necessary, with the addition of a foaming agent, and a gas (air or nitrogen gas) is injected into it to produce foams. The foams are laid in a 3 mm (approx.)-thick layer on an endless belt and cratered by blowing air from under the belt. The foamed material is then dried. The drying time is usually as short as about 10 to 15 minutes and there is no excessive temperature increase of the drying load itself, with the result that the flavor of the material is maintained well. Moreover, the dried product contains a large number of air cells and, therefore, is well reconstitutable. However, chemical seasonings even in high concentration do not afford a sufficiently high viscosity, and even if a foaming agent is added, fail to give stable foams. Thus, chemical seasonings cannot be easily foam-mat dried.

In view of the above background, the present inventors have sought for a method of producing a granular chemical seasoning having a high specific volume and a satisfactory solubility. The research led to a finding that the above desired granular seasoning can be successfully produced by adding a thickening agent and a foaming agent to an aqueous material chemical seasoning and foam-mat drying the resulting composition. This invention is predicated on the above finding.

This invention is accordingly directed to

(1) a granular chemical seasoning having a high specific volume, which comprises a chemical seasoning selected from monosodium glutamate, nucleotide seasonings and mixtures thereof, 0.5 to 8 weight percent of its solid content of a thickening agent selected from natural and semi-synthetic gums, sodium alginate, carboxymethyl cellulose and mixtures thereof, and 0.25 to 2 weight percent of said solid content of a foaming agent, the granular chemical seasoning after foam-mat drying having a specific volume of 3.5 to 6 $cm^3/g$; and

(2) a method of producing a granular chemical seasoning selected from monosodium glutamate, nucleotide seasonings and mixtures thereof having a high specific volume by foam-mat drying, characterised by adjusting an aqueous solution of the chemical seasoning to a viscosity of 8,000 to 25,000 centipoises with a thickening agent selected from natural and semi-synthetic gums, sodium alginate, carboxy methylcellulose and mixtures thereof, adding 0.25 to 2 weight percent of its solid content of a foaming agent, foam-mat drying the mixture and disintegrating the same.

The term "chemical seasoning" is used herein to denote monosodium glutamate, nucleotide seasonings such as water-soluble salt of 5'-ribonucleotide (e.g. sodium 5'-inosinate, potassium 5'-inosinate, sodium 5'-guanylate, potassium 5'-guanylate, etc.) and mixture of such seasonings.

Preferred examples of such mixtures are mixtures of 88 to 99 weight parts of monosodium glutamate with 12 to 1 weight parts of the water-soluble salt of 5'-ribonucleotide, and said water soluble salt of 5'-ribonucleotide is preferably sodium 5'-inosinate, sodium 5'-guanylate or a 50:50 (approx.) (weight) mixture of sodium 5'-inosinate and sodium 5'-guanylate.

In the production of the granular chemical seasoning having a high specific volume according to this invention there may be added suitable amounts of such auxiliary agents as acids (e.g. citric acid, tartaric acid, etc.), coloring matter (e.g. β-carotene, caramel, etc.) and nourishment fortifiers (e.g. vitamins, minerals, etc.).

The thickening agent employed in the practice of this invention includes such natural gums as plant seed gums (e.g. guar, locust bean), plant exudates (e.g. tragacanth, karaya) and microbial fermentation gums (e.g. xanthane), and such semi-synthetic gums as sodium alginate and carboxymethyl-cellulose. Mixtures of said thickening agent may be employed. According to the kinds of the chemical seasoning and other factors, one or more than one such thickening agents are selected and used. Particularly desirable, however, is the concomitant use of guar gum and sodium alginate.

The level of addition of the thickening agent depends on the type and concentration of the material chemical seasoning but it is preferable to employ thickening agents which will give high viscosities at the lowest possible level of addition.

Usually an aqueous solution of the material chemical seasoning is prepared with a sufficient amount of the thickening agent to give a viscosity of 8,000 to 25,000 centipoises. The amount of the thickening agent added for the preparation of the aqueous solution is 0.5 to 8 weight percent, preferably 1 to 4 weight percent, based on the weight of the solid content of the solution.

The above viscosities are those measured with Brookfield Viscometer (Brookfield Engineering Laboratories Incorporated, U.S.A.) at 30 r.p.m. at 25°C.

The method of addition of the thickening agent is not critical and may be the same as that used conventionally in the dissolution of the thickening agents in aqueous systems. For example, the thickening agent is first dispersed in water and dissolved by heating and, then, the material chemical seasoning is gradually added and dissolved. When the thickening agent does not disperse well, it is first admixed with the seasoning in particulate form and, then, the mixture is dispersed and dissolved in water.

The foaming agent employed in accordance with this invention is exemplified by glycerin fatty acid esters (monoglycerides, mainly stearic acid monoester), sucrose fatty acid esters (e.g. those based on lauric acid ester, stearic acid ester, palmitic acid ester or oleic acid ester), lecithin, foaming proteins (e.g. egg white, soybean albumin, soybean protein hydrolysate, etc.) and so on.

The level of addition of the foaming agent is 0.25 to 2 weight percent of the solid content of the material chemical seasoning.

The method of addition of the foaming agent is not particularly critical and may be the conventional method. Thus, for example, the foaming agent is added in portions with constant stirring.

Following the above addition of the foaming agent, the foaming of the material seasoning is effected by a suitable method, e.g. by vigorous stirring with air injected into the seasoning solution. The foamed material is then foam-mat dried.

For example, the foamed material is placed in a 3 mm (approx.)-thick layer on an endless belt and cratered by blowing air from under the belt, followed by drying with a hot current of air. The drying process consists of three stages and the first, second and third stages of drying are carried out at the temperatures of about 130°C, about 120°C and about 60°C, respectively.

The above method affords a chemical seasoning composition comprising said material chemical seasoning and, based on the solid content of the chemical seasoning, 0.5 to 8 weight percent of a thickening agent and 0.25 to 2 weight percent of a foaming agent. This composition is disintegrated by the following procedure.

Thus, the above dried chemical seasoning composition is scraped off and transferred to a disintegrating stage. The disintegrating machine may be an optional type of machine such as Power Mill (Showa Kagaku Kikai Co. Ltd., Japan), Atomizer (Fuji Paudal Co. Ltd., Japan), Fitz Mill (Hosokawa Micron Corporation, Japan) or Granulator (Nippon Granulator Co. Ltd., Japan). The granulation is desirably performed in such a manner that the final granular product has a grain size to pass a 12 mesh screen and a specific volume of about 3.5 to 6 $cm^3/g$ or more. To meet these requirements, to prevent formation of fine dusts, and to ensure a uniform grain size distribution, it is preferable to employ a granulator.

In the present specification, the term "mesh" means the mesh size of Tyler standard sieves (U.S.A.). The grain size of 12 mesh pass is that grains pass a 12-mesh screen.

The resulting granular chemical seasoning having a high specific volume is convenient in scaling because of its high specific volume, with a reduced tendency of scattering and dust formation, and is as well soluble in water as the material chemical seasoning.

Furthermore, the present granular chemical seasoning of a high specific volume has another advantage as follows.

In case of using the material chemical seasoning without making its specific volume to be high, and when such material chemical seasoning is in the form of its sodium salt, there is a fear that the material chemical seasoning might be added to food excessively, if erroneous scaling should happen, because of its amount to be scaled being relatively small. However, as the present granular seasoning is entirely free from such fear, because its high specific volume makes it very easy to scale correctly, thus avoiding excess amount of sodium taken into human.

The present granular chemical seasoning does not cause unpleasant feeling as a food additive, because its external appearance is similar to the external appearance of natural food materials.

The following examples are given to illustrate the present invention in further detail without limiting its scope.

Example 1

In Micro Speed Mixer (Takara Koki Co. Ltd., Japan), 470 g of guar gum, 470 g of sodium alginate and 4.7 kg of monosodium glutamate are blended. The resulting blend is dispersed in 34.2 kg of water at 35°C and the dispersion is heated at 70°C to give a homogeneous solution. Then, 16 kg of monosodium glutamate is added gradually in portions with stirring and dissolved. Then, 1.8 kg of sodium 5'-ribonucleotide [a 50:50 (weight) mixture of sodium 5'-inosinate and sodium 5'-guanylate] is added gradually under stirring and dissolved. The viscosity of this solution of chemical seasoning is about 21,000 centipoises (Brookfield Viscometer, 25°C). To 3 kg of water is added 350 g of glycerin fatty acid ester (Emalusy-MS, Riken Vitamin Co. Ltd., Japan) and the mixture is heated to 70°C and added to the above seasoning solution. The mixture is admixed well and dried in foam-mat.

First, with air injected into the above seasoning solution, the solution is foamed with a foaming machine. The density of the resulting foam is 0.55 g/cm³. The foamed material is laid in a 3 mm-thick layer on a perforated belt and cratered by blowing air from under the belt. There ensues a drying process. Thus, the drying temperatures are 130°C, 120°C and 60°C at the first, second and third stages, respectively, and the total drying time is 20 minutes. The dried seasoning is scraped off and pulverized in Granulator (Nippon Granulator Co. Ltd., Japan) to give granules of 12 mesh pass and having a specific volume of 5.0 cm³/g. The resulting product has fine and uniformly distributed air cells and shows a satisfactory solubility in water.

The specific volume of the control granules produced from the same composition with an extruding granulator and the specific volume of the granules according to this invention are shown in Table 1.

The above control granules are the granules produced in the following manner.

Monosodium glutamate is pulverized in Atomizer (Fuji Paudal Co. Ltd., Japan) using a 80-mesh screen. In Micro Speed Mixer (Takara Koki Co. Ltd., Japan), 46 kg of the finely divided monosodium glutamate and 4 kg of sodium 5'-ribonucleotide (a 50:50 mixture of sodium 5'-inosinate and sodium 5'-guanylate) are blended and further admixed with gradual addition of 4 kg of water. The resulting aqueous mixture is first preliminarily granulated with an extruding granulator equipped with a 10 mm-screen and, then, further granulated with a 12-mesh screen. The granules are then dried in Fluid Bed Dryer (Fuji Paudal Co. Ltd., Japan) at 90°C for 40 minutes to give a granular chemical seasoning.

TABLE 1

| Sample | Specific volume (cm³/g) |
|---|---|
| Extruding-granulated product | 1.6 |
| Granular product of this invention | 5.0 |

It will be apparent from the above table that the method of this invention affords a granular chemical seasoning having a very high specific volume.

Example 2

(1) In Micro Speed Mixer (Takara Koki Co. Ltd., Japan), 250 g of locust bean gum, 500 g of sodium alginate and 4.25 kg of monosodium glutamate are blended. This mixture is dispersed in 34.5 kg of water at 35°C and heated at 80°C until it is completely dissolved. Then, 20 kg of monosodium glutamate is added gradually in portions with stirring and dissolved. The viscosity of the seasoning solution at this stage is 10,000 centipoises (Brookfield Viscometer, 25°C). Separately, 250 g of glycerin fatty acid ester (Emalusy-MS, Riken Vitamin Oil Co. Ltd.) and 125 g of sucrose fatty acid ester (DK-Ester F-110, Dai-ichi Kogyo Seiyaku Co. Ltd., Japan) are added to 3 kg of water, and the mixture is heated to 70°C and admixed with the above seasoning solution. The whole mixture is then foam-mat dried.

First, with air constantly injected into the seasoning solution, the solution is foamed with a foaming machine. The density of the foam is 0.59 g/cm³. The foamed material is laid in a 3 mm-thick layer on a perforated belt and cratered by blowing air from under the belt. The material is then dried. The drying temperatures are 130°C, 120°C and 60°C at the first, second and third stages, respectively, and the total drying time is 20 minutes. The dried seasoning is scraped off and disintegrated with Granulator (Nippon Granulator Co. Ltd.) to give a 12-mesh-pass granular seasoning with a specific volume of 4.3 cm³/g.

The product obtained above has fine and uniformly distributed air cells and a high specific volume and shows an excellent solubility in water.

(2) In Micro Speed Mixer (Takara Koki Co. Ltd., Japan), 200 g of guar gum, 200 g of sodium alginate and 5 kg of sodium 5'-ribonucleotide [a 50:50 (weight) mixture of sodium 5'-inosinate and sodium 5'-guanylate] are blended. This mixture is dispersed in 35 kg of water at 35°C and heated at 80°C until it is completely dissolved. Then, 15 kg of sodium 5'-ribonucleotide is added gradually under stirring and dissolved. The viscosity of the seasoning solution at this stage is 10,000 centipoises (Brookfield Viscometer, 25°C). Separately, 150 g of glycerin fatty acid ester (Emalusy-MS, Riken Vitamin Oil Co. Ltd.) and 50 g of sucrose fatty acid ester (DK-Ester F-110, Dai-ichi Kogyo Seiyaku Co. Ltd., Japan) are added to 3 kg of water, and the mixture is heated to 70°C and admixed with the above seasoning solution. The whole mixture is then foam-mat dried.

First, with air constantly injected into the seasoning solution, the solution is foamed with a foaming machine. The density of the foam is 0.34 g/cm³. The foamed material is laid in a 3 mm-thick layer on a perforated belt and cratered by blowing air from under the belt. The material is then dried. The drying temperatures are 130°C, 120°C and 60°C at the first, second and third stages, respectively, and the total drying time is 20 minutes. The dried seasoning is scraped off and disintegrated with Granulator (Nippon Granulator Co. Ltd.) to give a 12-mesh-pass granular seasoning with a specific volume of 5.0 cm³/g.

The product obtained above has fine and uniformly distributed air cells and a high specific volume and shows an excellent solubility in water.

In the use of the granules of monosodium glutamate and the granules of sodium 5'-ribonucleotide, they may be mixed at a portion for example 95:5 or 92:8 (weight parts).

Example 3

In Micro Speed Mixer (Takara Koki Co. Ltd., Japan), 250 g of locust bean gum, 650 g of sodium alginate and 4.5 kg of monosodium glutamate are blended. The resulting blend is dispersed in 32.5 kg of water at 35°C and the dispersion is heated at 70°C to give a homogeneous solution. Then, 15.3 kg of monosodium glutamate is added gradually in portions with stirring and dissolved. Then, 2.7 kg of sodium 5'-inosinate is added gradually under stirring and dissolved. The viscosity of this chemical seasoning solution is about 17,500 centipoiss (Brookfield Viscometer, 25°C). To 3 kg of water is added 200 g of glycerin fatty acid ester (Emalusy-MS, Riken Vitamin Co. Ltd., Japan) and 130 g of sucrose fatty acid ester (DK-Ester F-110, Dai-ichi Kogyo Seiyaku Co. Ltd., Japan) and the mixture is heated to 70°C and added to the above seasoning solution. The mixture is admixed well and dried in foam-mat.

First, with air injected into the above seasoning solution, the solution is foamed with a foaming machine. The density of the resulting foam is 0.59 g/cm$^3$. The foamed material is laid in a 3 mm-thick layer on a perforated belt and cratered by blowing air from under the belt. There ensues a drying process. Thus, the drying temperatures are 130°C, 120°C and 60°C at the first, second and third stages, respectively, and the total drying time is 20 minutes. The dried seasoning is scraped off and pulverized in Granulator (Nippon Granulator Co. Ltd., Japan) to give granules of 12 mesh pass and having a specific volume of 5.3 cm$^3$/g. The resulting product has fine and uniformly distributed air cells and shows satisfactory solubility in water.

Example 4

In Micro Speed Mixer (Takara Koki Co. Ltd., Japan), 250 g of guar gum, 500 g of sodium alginate, 100 g of xanthane gum and 4.0 kg of monosodium glutamate are blended. The resulting blend is dispersed in 32 kg of water at 35°C and the dispersion is heated at 70°C to give a homogeneous solution. Then, 17.6 kg of monosodium glutamate is added gradually in portions with stirring and dissolved. Then, 900 g of sodium 5'-guanylate is added gradually under stirring and dissolved. The viscosity of this chemical seasoning solution is about 19,300 centipoises (Brookfield Viscometer, 25°C). To 3 kg of water is added 280 g of glycerin fatty acid ester (Emalusy-MS, Riken Vitamin Co. Ltd., Japan) and the mixture is heated to 70°C and added to the above seasoning solution. The mixture is admixed well and dried in foam-mat.

First, with air injected into the above seasoning solution, the solution is foamed with a foaming machine. The density of the resulting foam is 0.57 g/cm$^3$. The foamed material is laid in a 3 mm-thick layer on a perforated belt and cratered by blowing air from under the belt. There ensues a drying process. Thus, the drying temperatures are 130°C, 120°C and 60°C at the first, second and third stages, respectively, and the total drying time is 20 minutes. The dried seasoning is scraped off and pulverized in Granulator (Nippon Granulator Co. Ltd., Japan) to give granules of 12 mesh pass and having a specific volume of 5.1 cm$^3$/g. The resulting product has fine and uniformly distributed air cells and shows a satisfactory solubility in water.

**Claims for the Contracting States: BE, CH, DE, FR, GB, IT, LI, LU, NL, SE**

1. A granular chemical seasoning having a high specific volume, which comprises a chemical seasoning selected from monosodium glutamate, nucleotide seasonings and mixtures thereof, 0.5 to 8 weight percent of its solid content of a thickening agent selected from natural and semi-synthetic gums, sodium alginate, carboxymethyl cellulose and mixtures thereof, and 0.25 to 2 weight percent of said solid content of a foaming agent, the granular chemical seasoning after foam-mat drying having a specific volume of 3.5 to 6 cm$^3$/g.

2. A granular chemical seasoning according to claim 1, wherein the granular chemical seasoning is of a size to pass 1.41 mm (12 mesh) screen.

3. A granular chemical seasoning according to claim 1, wherein the chemical seasoning is monosodium glutamate.

4. A granular chemical seasoning according to claim 1, wherein the chemical seasoning is a mixture of monosodium glutamate, sodium 5'-inosinate and sodium 5'-guanylate.

5. A method of producing a granular chemical seasoning selected from monosodium glutamate, nucleotide seasonings and mixtures thereof having a high specific volume by foam-mat drying, characterised by adjusting an aqueous solution of the chemical seasoning to a viscosity of 8,000 to 25,000 centipoises with a thickening agent selected from natural and semi-synthetic gums, sodium alginate, carboxy methylcellulose and mixtures thereof, adding 0.25 to 2 weight percent of its solid content of a foaming agent, foam-mat drying the mixture and disintegrating the same.

6. A method of producing a granular chemical seasoning according to claim 5, wherein the grnaular chemical seasoning has a specific volume of 3.5 to 6 cm$^3$/g.

7. A method of producing a granular chemical seasoning according to claim 5, wherein the disintegration is carried out to a size of pass a 1.41 mm (12 mesh) screen.

8. A method of producing a granular chemical seasoning according to claim 5, wherein the material chemical seasoning is monosodium glutamate.

9. A method of producing a granular chemical seasoning according to claim 5, wherein the material chemical seasoning is a mixture of monosodium glutamate, sodium 5'-inosinate and sodium 5'-guanylate.

**Claims for the Contracting State: AT**

1. A method of producing a granular chemical seasoning selected from monosodium glutamate, nucleotide seasonings and mixtures thereof having a high specific volume by foam-mat drying, characterised by adjusting an aqueous solution of the chemical seasoning to a viscosity of 8,000 to 25,000 centipoises with a thickening agent selected from natural and semi-synthetic gums, sodium alginate, carboxy methylcellulose and mixtures thereof, adding 0.25 to 2 weight percent of its solid content of a foaming agent, foam-mat drying the mixture and disintegrating the same.

2. A method of producing a granular chemical seasoning according to claim 1, wherein the granular chemical seasoning has a specific volume of 3.5 to 6 cm³/g.

3. A method of producing a granular chemical seasoning according to claim 1, wherein the disintegration is carried out to a size to pass a 1.41 mm (12 mesh) screen.

4. A method of producing a granular chemical seasoning according to claim 1, wherein the material chemical seasoning is monosodium glutamate.

5. A method of producing a granular chemical seasoning according to claim 1, wherein the material chemical seasoning is a water-soluble salt of 5'-ribonucleotide.

6. A method of producing a granular chemical seasoning according to claim 1, wherein the material chemical seasoning is a mixture of monosodium glutamate and a water-soluble salt of 5'-ribonucleotide.

7. A method of producing a granular chemical seasoning according to claim 5 to 6, wherein the water-soluble salt of 5'-ribonucleotide is a mixture of sodium 5'-inosinate and sodium 5'-guanylate.

8. A method of producing a granular chemical seasoning according to Claim 5 or 6, wherein the water-soluble salt of 5'-ribonucleotide is sodium 5'-inosinate.

9. A method of producing a granular chemical seasoning according to Claim 5 or 6, wherein the water-soluble salt of 5'-ribonucleotide is sodium 5'-guanylate.

**Patentansprüche für die Vertragsstaaten: BE, CH, DE, FR, GB, IT, LI, LU, NL, SE**

1. Ein körniges chemisches Gewürz mit einem hohen spezifischen Volumen, umfassend ein chemisches Gewürz ausgewählt aus Mononatriumglutamat, Nukleotid-Gewürzen und Mischungen derselben, mit 0,5—8 Gew.-% seines Feststoffgehaltes aus einem Verdickungsmittel, ausgewählt aus natürlichen und halbsynthetischen Gummis, Natriumalginat, Carboxymethylzellulose und Mischungen derselben, und mit 0,25—2 Gew.-% des genannten Feststoffgehaltes aus einem Schaumbildner, wobei das körnige chemische Gewürz nach Schaummattentrocknung ein spezifisches Volumen von 3,5—6 cm³/g aufweist.

2. Ein körniges chemisches Gewürz nach Anspruch 1, worin das körnige chemische Gewürz solche Abmessungen aufweist, daß es durch ein 1,41 mm Sieb (12 Mesh) fällt.

3. Ein körniges chemisches Gewürz nach Anspruch 1, worin das chemische Gewürz Mononatriumglutamat ist.

4. Ein körniges chemisches Gewürz nach Anspruch 1, worin das chemische Gewürz eine Mischung aus Mononatriumglutamat, Natrium-5'-inosinat und Natrium-5'-guanylat ist.

5. Ein Verfahren zur Herstellung eines körnigen chemischen Gewürzes ausgewählt aus Mononatriumglutamat, Nukleotidgewürzen und Mischungen derselben mit einem hohen spezifischen Volumen durch Schaummattentrocknung, dadurch gekennzeichnet, daß eine wässerige Lösung des chemischen Gewürzes auf eine Viskosität von 8,000 bis 25,000 Centipoise mit einem Verdickungsmittel, ausgewählt aus natürlichen und halbsynthetischen Gummis, Natriumalginat, Carboxymethylzellulose und Mischungen derselben, eingestellt wird, 0,25 bis 2 Gew.-% ihres Feststoffgehaltes an einem Schaumbildner zugegeben werden, die Mischung der Schaummattentrocknung unterworfen und dann zerkleinert wird.

6. Ein Verfahren zur Herstellung eines körnigen chemischen Gewürzes nach Anspruch 5, worin das körnige chemische Gewürz ein spezifisches Volumen von 3,5—6 cm³/g aufweist.

7. Ein Verfahren zur Herstellung eines körnigen chemischen Gewürzes nach Anspruch 5, worin die Zerkleinerung auf solche Abmessungen vorgenommen wird, daß es durch ein 1,41 mm Sieb (12 Mesh) fällt.

8. Ein Verfahren zur Herstellung eines körnigen chemischen Gewürzes nach Anspruch 5, worin das gegenständliche chemische Gewürz Mononatriumglutamat ist.

9. Ein Verfahren zur Herstellung eines körnigen chemischen Gewürzes nach Anspruch 5, worin das gegenständliche chemische Gewürz eine Mischung aus Mononatriumglutamat, Natrium-5'-inosinat und Natrium-5'-guanylat ist.

**Patentansprüche für den Vertragsstaat: AT**

1. Ein Verfahren zur Herstellung eines körnigen chemischen Gewürzes ausgewählt aus Mononatriumglutamat, Nukleotidgewürzen und Mischungen derselben mit einem hohen spezifischen Volumen durch Schaummattentrocknung, dadurch gekennzeichnet, daß eine wässerige Lösung des chemischen Gewürzes auf eine Viskosität von 8,000 bis 25,000 Centipoise mit einem Verdickungsmittel ausgewählt aus natürlichen und halbsynthetischen Gummis, Natriumalginat, Carboxymethylzellulose und Mischungen derselben, eingestellt wird, 0,25 bis 2 Gew.-% ihres Feststoffgehaltes eines Schaumbildners zugegeben wird, die Mischung der Schaummattentrocknung unterworfen und dann zerkleinert wird.

2. Ein Verfahren zur Herstellung eines körnigen chemischen Gewürzes nach Anspruch 1, worin das körnige chemische Gewürz ein spezifisches Volumen von 3,5 bis 6 cm³/g aufweist.

3. Ein Verfahren zur Herstellung eines körnigen chemischen Gewürzes nach Anspruch 1, worin die Zerkleinerung auf solche Abmessungen vorgenommen wird, daß es durch ein 1,41 mm Sieb (12 Mesh) fällt.

4. Ein Verfahren zur Herstellung eines körnigen chemischen Gewürzes nach Anspruch 1, worin das gegenständliche chemische Gewürz Mononatriumglutamat ist.

5. Ein Verfahren zur Herstellung eines körnigen chemischen Gewürzes nach Anspruch 1, worin das gegenständliche chemische Gewürz ein wasserlösliches Salz von 5'-Ribonukleotid ist.

6. Ein Verfahren zur Herstellung eines körnigen chemischen Gewürzes nach Anspruch 1, worin das gegenständliche chemische Gewürz ein Gemisch aus Mononatriumglutamat und einem wasserlöslichen Salz von 5'-Ribonukleotid ist.

7. Ein Verfahren zur Herstellung eines körnigen chemischen Gewürzes nach Anspruch 5 bis 6, worin das wasserlösliche Salz von 5'-Ribonukleotid eine Mischung aus Natrium-5'-inosinat und Natrium-5'-guanylat ist.

8. Ein Verfahren zur Herstellung eines körnigen chemischen Gewürzes nach Anspruch 5 oder 6, worin das wasserlösliche Salz von 5'-Ribonukleotid Natrium-5'-inosinat ist.

9. Ein Verfahren zur Herstellung eines körnigen chemischen Gewürzes nach Anspruch 5 oder 6, worin das wasserlösliche Salz von 5'-Ribonukleotid Natrium-5'-guanylat ist.

**Revendications pour les Etats Contractants: BE, CH, DE, FR, GB, IT, LI, LU, NL, SE**

1. Assaisonnement chimique granulaire ayant un grand volume spécifique, qui comprend un assaisonnement chimique choisi parmi le glutamate monosodique, des assaisonnements nucléotides et des mélanges de ceux-ci, de 0,5 à 8% en poids de sa teneur en matière solide d'un agent épaississant choisi parmi les gommes naturelles et semi-synthétiques, l'alginate de sodium, la carboxyméthyl cellulose et leurs mélanges, et de 0,25 à 2% en poids de ladite teneur en matière solide d'un agent moussant, l'assaissonnement chimique granulaire ayant, après séchage sous forme de tapis de mousse, un volume spécifique de 3,5 à 6 cm³/g.

2. Assaisonnement chimique granulaire selon la revendication 1, dans lequel l'assaisonnement chimique granulaire est d'une dimension apte à passer à travers un tamis de 1,41 mm (12 mesh).

3. Assaisonnement chimique granulaire selon la revendication 1, dans lequel l'assaisonnement chimique est du glutamate monosodique.

4. Assaisonnement chimique granulaire selon la revendication 1, dans lequel l'assaisonnement chimique est un mélange de glutamate monosodique, de 5'-inosinate de sodium et de 5'-guanylate de sodium.

5. Procédé de préparation d'un assaisonnement chimique granulaire choisi parmi le glutamate monosodique, les assaisonnements nucléotides et les mélanges de ceux-ci, ayant par séchage sous forme de tapis de mousse un grand volume spécifique, caractérisé en ce que l'on ajuste une solution aqueuse de l'assaisonnement chimique à une viscosité de 8 000 à 25 000 centipoises au moyen d'un agent épaississant choisi parmi les gommes naturelles et semi-synthétiques, l'alginate de sodium, la carboxyméthylcellulose et les mélanges de ceux-ci, on ajoute de 0,25 à 2% en poids de la teneur en matière solide d'un agent moussant, on sèche le mélange sous forme de tapis de mousse et l'on désintègre le mélange.

6. Procédé de préparation d'un assaisonnement chimique granulaire selon la revendication 5, dans lequel l'assaisonnement chimique granulaire a un volume spécifique de 3,5 à 6 cm³/g.

7. Procédé de préparation d'un assaisonnement chimique granulaire selon la revendication 5, dans lequel la désagrégation est effectuée jusqu'à une dimension apte à passer à travers un tamis de 1,41 mm (12 mesh).

8. Procédé de préparation d'un assaisonnement chimique granulaire selon la revendication 5, dans lequel le produit d'assaisonnement chimique est le glutamate monosodique.

9. Procédé de préparation d'un assaisonnement chimique granulaire selon la revendication 5, dans lequel le produit d'assaisonnement chimique est un mélange de glutamate monosodique, de 5'-inosinate de sodium et de 5'-guanylate de sodium.

**Revendications pour l'Etat Contractant: AT**

1. Procédé de préparation d'un assaisonnement chimique granulaire choisi parmi le glutamate monosodique, les assaisonnements nucléotides et les mélanges de ceux-ci, ayant par séchage sous forme de tapis de mousse un grand volume spécifique, caractérisé en ce que l'on ajuste une solution aqueuse de l'assaisonnement chimique à une viscosité de 8 000 à 25 000 centipoises au moyen d'un agent épaississant choisi parmi les gommes naturelles et semi-synthétiques, l'alginate de sodium, la carboxyméthylcellulose et les mélanges de ceux-ci, on ajoute de 0,25 à 2% en poids de la teneur en produit solide d'un agent moussant, on sèche le mélange sous forme de tapis de mousse et l'on désagrège le mélange.

2. Procédé de production d'un assaisonnement chimique granulaire selon la revendication 1, dans lequel l'assaisonnement chimique granulaire a un volume spécifique de 3,5 à 6 cm³/g.

3. Procédé de préparation d'un assaisonnement chimique granulaire selon la revendication 1, dans lequel la désintégration est effectuée jusqu'à une dimension apte à passer à travers un tamis de 1,41 mm (12 mesh).

4. Procédé de préparation d'un assaisonnement chimique granulaire selon la revendication 1, dans lequel le produit d'assaisonnement chimique est le glutamate monosodique.

5. Procédé de préparation d'un assaisonnement chimique granulaire selon la revendication 1, dans lequel le produit d'assaisonnement chimique est un sel hydrosoluble de 5'-ribonucléotide.

6. Procédé de préparation d'un assaisonnement chimique granulaire selon la revendication 1, dans lequel le produit d'assaisonnement chimique est un mélange de glutamate monosodique et d'un sel hydrosoluble de 5'-ribonucléotide.

7. Procédé de préparation d'un assaisonnement chimique granulaire selon la revendication 5 ou 6, dans lequel le sel hydrosoluble de 5'-ribonucléo-tide est un mélange de 5'-inosinate de sodium et de 5'-guanylate de sodium.

8. Procédé de préparation d'un assaisonnement chimique granulaire selon la revendication 5 ou 6, dans lequel le sel hydrosoluble de 5'-ribonucléo-tide est le 5'-inosinate de sodium.

9. Procédé de préparation d'un assaisonnement chimique granulaire selon la revendication 5 ou 6, dans lequel le sel hydrosoluble de 5'-ribonucléo-tide est le 5'-guanylate de sodium.